# EUROPEAN PATENT SPECIFICATION

(11) **EP 1 608 811 B1**
(45) Date of publication and mention of the grant of the patent: **21.11.2007**
(21) Application number: 04725078.2
(22) Date of filing: 01.04.2004
(51) Int. Cl.: D21H 27/30, B32B 29/00

(54) **MULTILAYER PRODUCT AND METHOD FOR THE PRODUCTION THEREOF**
MEHRSCHICHTPRODUKT UND VERFAHREN ZU SEINER HERSTELLUNG
PRODUIT MULTICOUCHE ET SA METHODE DE PRODUCTION

(30) Priority: 01.04.2003 FI 20030491
(43) Date of publication of application: 28.12.2005
(73) Proprietor: M-Real Oyj, 02100 Espoo (FI)
(72) Inventor: AHO, Outi, FI-00210 Helsinki (FI); GÄDDA, Lars, FI-02750 Espoo (FI); PELTONEN, Soili, FI-05200 Rajamäki (FI); IMMONEN, Kirsi, FI-00350 Helsinki (FI); LIUKKONEN, Sari, FI-02210 Espoo (FI); FUNCK, Heli, FI-01180 Kalkkiranta (FI); HILTUNEN, Eero, FI-00350 Helsinki (FI)
(74) Representative: Sundman, Patrik Christoffer
(86) International application number: PCT/FI2004/000201
(87) International publication number: WO 2004/088039

(56) References cited:
- US-A- 5 910 385
- US-A- 6 162 596

## Description

The present invention concerns a multilayered product in accordance with the preamble of claim 1.

A product of this kind generally comprises at least one first layer, which is formed by cellulosic or lignocellulosic fibres, and at least one second layer, which is arranged next to the first layer or at a distance thereto.

The invention also relates to a method according to the preamble of claim 15 for producing such a product.

Papers and paper products, which contain electrically conductive polymers, are known from the patent literature. Thus, US Patent Specification No. 5,421,959 discloses a composite consisting of paper and an electrically conductive polymer, which is suitable for use e.g. as an electrode in primary or secondary batteries, as an antistatic packaging material and in products shielding against electromagnetic radiation. The composite is manufactured by immersing the paper into a solution, which contains a precursor of an electrically conductive, conjugated polymer, which is then impregnated into the paper, the paper subsequently being heat treated in order to form a polymer on the surface of the paper.

DE Published Patent Application No. 19826800 discloses a security paper, which contains rodlike pigments or transparent polymers, which are electrically conducting. The pigments or the polymers can be mixed into the paper by adding them to the furnish in the headbox of a paper machine in order to evenly distributed them throughout the paper pulp.

A wallpaper which protects against radiomagnetic radiation is presented in EP Published Patent Application 1 139 710, said wallpaper being manufactured by coating a wallpaper with a mixture containing a matrix polymer, an electrically conductive polymer and additive components mixed with these.

In the known paper products, the polymers are rather loosely attached to the fibrous matrix. When the polymer is mechanically mixed with the fibers, the attachment of the polymer to the fibres is weak, because the polymer is generally hydrophobic and the fibres are hydrophilic. By polymerizing a precursor impregnated into the paper, the polymer is precipitated primarily on top of the fibres because there is only a minor penetration of the precursor into the ready-made fibrous matrix of the paper, which means that polymerization takes place on the surface of the fibrous matrix. And then again, when a paper is coated with a layer, which contains an electrically conductive polymer, the electrically conductive polymer does not bond directly to the cellulosic fibres but rather to the matrix polymer, whereby the electrically conductive polymer remains on the surface of the product and is released therefrom together with the coating colour.

In connection with the present invention we have found that it is important for the practical production process and for the use of the products that the electrically conductive polymer (Conductive Polymer) is attached to the paper and cardboard product in such a way that it does not easily detach from it. Any polymer released from the fibres will impair the recovery and recycling of the circulation aqueous flows on a paper machine and, consequently, weaken the functionality of the product in due course. Furthermore, it would be preferable to introduce the conductive polymer into the fibrous product directly during the production process.

US Patent Specification No. 5,211,810 discloses a package, which can be used for frying in microwave ovens, containing fibres having an electrically conductive polymer deposited on the surface thereof. The polymerization is carried out *in situ* in the presence of a strong mineral acid, viz. 1 N hydrochloric acid. There is no mention in the publication of the electrical conductivity of the fibres or of products manufactured therefrom.

Even this known solution exhibits considerable disadvantages. Thus, as a consequence of the polymerization conditions a significant part of the polymer has become homopolymerized in the solution. This homopolymer will separate from the reaction mixture. At the conditions described in the US Patent the low pH of the mineral acid will further be detrimental to the properties of cellulosic and lignocellulosic fibres. The acid will, therefore, modify for example the amorphous regions of cellulose. When pH drops below 2, the strength potential of the fibrous product is significantly lowered. A low pH will keratinize the fibre and the water retention capacity of the fibre is impaired. Such a keratinized fibre also requires considerably much more beating energy. The fibres are also stiffer. A treatment at low pH is almost comparable to drying of the cellulosic pulp.

The invention aims at providing a paper or cardboard product of a novel kind, containing a layer with electrically conductive polymers. This layer is preferably fitted below the surface of the paper or cardboard product.

According to the invention, a multilayered product containing at least two layers (a first and a second layer) is produced, the first layer being a fibrous web and the second comprising a synthetic, electrically conductive polymer which is mixed with a binder, which forms a binding agent matrix, whereby the second layer is at least partially electrically conductive. This second layer can be placed in contact with the first layer directly or via an intermediate layer (or via intermediate layers). It is essential that in the product the electrically conductive layer is covered by a fibrous layer on at least one side.

More specifically, the product according to the invention is characterized by what is stated in the characterizing part of claim 1.

The method according to the invention is, again, characterized by what is stated in the characterizing part of claim 15.

Considerable advantages are obtained by means of the invention. Thus, the conductive polymer can be placed between two paper webs along with the glue used for lamination. This way, one superfluous processing step can be avoided. When the conductive polymer is placed between paper layers it does not disturb the present main functions of the paper, but the surface of the paper or cardboard can, e.g., be utilized as a printing surface. A conductive polymer placed between the layers can provide several different functions and it is not visible to the consumer. The conductive polymer can be utilized for example for equipping the product with additional information or for checking the authenticity of the product.

No contact is needed for measuring conductivity. Non-contact measurement can be carried out at a short distance using, e.g. capacitive measurement. The option of non-contact measurement is advantageous in embodiments of the invention in which the conductive polymer is laminated below the fibrous layer, e.g. between fibrous layers.

By adjusting the amount of the electrically conductive polymer it is possible to reach a selected conductivity level, which is, for example, 10⁴-10¹¹ ohm/square, typically about 10⁴ -10⁸ ohm/square. When the square resistance is 10⁸ ohm or lower, the product can easily be distinguished from non-conductive products. By incorporating a conductive network in the paper or cardboard it is possible to provide several different functions which, depending on the conductivity level, are associated with antistatic applications, storage of identification data, security marks, etc.

In particular, the present invention provides a fibrous product having an electrical conductivity, which is maintained over extended periods of time. Accompanying the binder, the polymer is evenly and homogeneously distributed throughout the whole layer. This gives the advantage that good conductivity is reached with small polymer concentrations. As the examples below show, an amount of 10 weight-% polyaniline already gives a good electrical conductivity, which is of the order of 10⁴ Ohm.

In the following, the invention will be examined more closely with the aid of a detailed description and some working embodiments.

In a multilayered product according to the invention there are at least two layers, conventionally at least three. The layered structure contains at least one "first" layer, which is formed by cellulosic or lignocellulosic fibres, and at least one "second" layer, which is fitted next to the first layer or at a distance from it. The "first" layer is in the present invention substantially a continuous fibrous layer and the "second" layer is a binding agent layer, which is continuous or non-continuous. This second layer contains a synthetic, electrically conductive polymer (conductive polymer), which is mixed with the binder, which forms a binder matrix. By matrix is meant a polymer network or layer, which is at least partially continuous in such a way that it is capable of forming continuous surfaces and layers. Due to the electrically conductive polymer the second layer is at least partially electrically conductive or it can be rendered electrically conductive. The surface resistivity of a second layer in electrically conductive form is typically about 10exp2 - 10exp11 Ohm, preferably about 10exp3 - 10exp10 Ohm, in particular about 10exp4 - 10exp9 Ohm. In the examples below, a surface resistivity of 10exp5 - 10exp9 Ohm was reached.

The grammage of the web formed by the fibre matrix is generally approximately 5 to 700 g/m², typically approximately 20 to 500 g/m², for instance approximately 30 to 150 g/m² with paper, and 80 to 300 g/m² with cardboard. The grammage of a multilayered product is generally 10 to 1500 g/m², typically about 40 to 1000 g/m².

The binder can be used in a conventional fashion for lamination of fibrous webs, i.e. for gluing fibrous webs to each other. Thus, according to a preferred embodiment of the invention, in the multilayered product there are two first layers, which are attached to each other by a second layer fitted between them. These first layers consist of cellulosic or lignocellulosic fibrous webs (paper and/or cardboard layers). By means of this solution, the layer containing conductive polymer can be covered from both sides. In a further preferred embodiment, the fibrous webs are formed by unsymmetrical paper or cardboard webs, which can be glued together in such a way that their coarser side abut each other. "Unsymmetrical" means that the surfaces of the webs are different, in particular that one surface is smooth and the other coarse, generally the coarseness of the smooth surface (PPS1000) is on the order of 5 or less, e.g. below 4.5, preferably about 4 to 1 microns, and the coarseness of the smooth surface is greater than for the smooth surface, e.g. generally above 4, in some cases more than 4.5 or more than 5.

In a multilayered product there can be, in addition to the above, an intermediate layer between the first and the second layers which promotes mutual adhesion of the layers. Such a "tielayer" can be formed by a binder, which is the same as or a different than the binder of the second layer. The layer can also comprise a thermoplastic material.

In addition to the above layers, the multilayered product typically exhibits a third layer which is placed on top of the first or second layer. Such a third layer can be formed by a plastic film, e.g. a polyolefin film, which is extruded on the surface of the product. Alternatively, the third layer can comprise a coating layer applied on the surface of a surface layer. The third layer thus forms the surface layer of the product and gives the product properties of barrier or sealability. The product can thereby e.g. be attached to a plastic substrate via the third layer. At the same time, it protects the conductive layer. If the third layer is non-transparent - if it for example consists of an opaque material, it covers the conductive layer, which is then hid behind the third layer. A conventional coating layer consisting of mineral particles is always to some extent porous, which means that it is possible to print a desired figure through it onto the conductive layer by using, e.g. an acid or alkaline printing colour, which dopes or dedopes, respectively, the conductive polymer.

When the third layer is formed by a coating layer, this is applied from a suitable coating composition or coating colour. The coating can be carried out in a manner known per se as a single coating or a double-coating, whereby the coating colours used also include single coating colours and coating colours for precoating and surface coating. Triple coatings are also possible. Generally, a coating colour according to the invention contains 10 to 100 parts by weight of at least one pigment or a mixture of pigments, 0.1 to 30 parts by weight of at least one binder, 0.1 to 50 parts by weight of a conductive polymer and 1 to 10 parts by weight of other additives known per se.

The typical composition of a precoating mixture is as follows:

| Coating pigment | |
|---|---|
| (for example, coarse calcium carbonate) | 100 parts by weight |
| Conductive polymer | 1- 20 parts by weight |
| Binder | 1-20 weight-% of the pigment |
| Additives and auxiliary agents | 0.1-10 weight-% of the pigment |
| Water | balance |

Water is added to the precoating mix so that the solids content is generally from 40 to 70 %.

According to the present invention, the composition of the surface-coat mixture or single coat mixture is as follows:

| Coating pigment I | |
|---|---|
| (for example, fine carbonate) | 10 - 90 parts by weight |
| Coating pigment II | |
| (for example fine kaolin) | 10 - 90 parts by weight |
| Pigment total | 100 parts by weight |
| Conductive polymer | 1- 30 parts by weight |
| Binder | 1- 20 parts by weight |
| Additives and auxiliary agents | 0.1-10 parts by weight |
| Water | balance |

Water is added to this kind of a coating colour so that the dry solids content is typically from 50 to 75%.

According to the present invention, in the coating colours presented above it is possible to use pigments that have a steep particle size distribution, so that the case at maximum 35 % of the pigment particles are smaller than 0.5 um, preferably at maximum 15 % are smaller than 0.2 um.

In the coating compositions, typically mineral or synthetic light-scattering pigments are used. Precipitated calcium carbonate, ground calcium carbonate, calcium sulphate, calcium oxalate, aluminium silicate, kaolin (hydrous aluminium silicate), aluminium hydroxide, magnesium silicate, talc (hydrous magnesium silicate), titanium dioxide and barium sulphate, and mixtures thereof can be mentioned as examples of the pigments. Synthetic pigments can also be used. Of the pigments mentioned above, the main pigments are kaolin, calcium carbonate, precipitated calcium carbonate and gypsum, which in general constitute over 50 % of the dry solids in the coating mix. Calcined kaolin, titanium dioxide, satin white, aluminium hydroxide, sodium silicoaluminate and plastics pigments are additional pigments, and their amounts are in general less than 25 % of the dry solids in the mix. Of the special pigments, special-quality kaolins and calcium carbonates, as well as barium sulphate and zinc oxide, should be mentioned.

The present invention is applied to, in particular, mineral pigments selected from aluminium silicate and aluminium hydroxide, magnesium silicate, titanium dioxide and/or barium sulphate, as well as mixtures thereof.

It is possible to use any known binders generally employed in paper production as binders in the coating colours. Besides the individual binders, it is also possible to use mixtures of binders. Examples of typical binders include synthetic latexes made up of polymers or copolymers of ethylenically unsaturated compounds, e. g. copolymers of the butadienestyrene type, which possibly also have a comonomer containing a carboxyl group, such as acrylic acid, itaconic acid or maleic acid, and polyvinyl acetate having comonomers that contain carboxyl groups. Together with the materials cited above, it is also possible to use, for example, the water-soluble polymers, starch, CMC, hydroxyethyl cellulose and polyvinyl alcohol as binders.

Furthermore, it is possible to use conventional additives and auxiliary agents, such as dispersants (e. g. sodium salt of polyacrylic acid), agents affecting the viscosity and water retention of the mix (e. g. CMC, hydroxyethyl cellulose, polyacrylates, alginates, benzoate), so-called lubricants, hardeners used for improving water-resistance, optical auxiliary agents, anti-foaming agents, pH control gents, and preservatives in the coating composition. Examples of lubricants include sulphonate oils, esters, amines, calcium or ammonium stearates; of agents improving water resistance, glyoxal; of optical auxiliary agents, diaminostilbene disulfonic acid derivatives; of anti-foaming agents, phosphate esters, silicones, alcohols, ethers, vegetable oils; of pH control agents, sodium hydroxide, ammonia; and finally of preservatives, formaldehyde, phenol, quaternary ammonium salts.

The coating mix can be applied to the material web in a manner known per se. The method according to the present invention for coating paper and/or board can be carried out with a conventional coating apparatus, i.e. by blade coating, or by film coating or JET application.

When the paper web is coated on at least one side, preferably both sides, a coating layer is formed having a grammage of 5 to 30 g/m². The uncoated side can be treated by, e.g., surface sizing.

In addition to the previous alternatives, it is clear that the layered structure according to the invention can be freely modified depending on the intended use. The structure can contain various barrier layers, such as polyester and EVAL layers and aluminium film(s). Generally the structure contains 2 to 10 layers, in particular 3 to 5 layers, whereby it is essential that there is at least one layer of a conductive polymer (i.e. a "second layer") under the fibrous layer (i.e. the "first layer"), preferably arranged in such a way that its conductivity can be measured through the fibrous layer.

The amount of binder in the second layer can vary within a broad range, but generally it is within the range used for conventional lamination, i.e. about 0.1 to 10 g/m², typically about 0.5 to 5 g/m², preferably about 1 to 3.5 g/m². The binder used in the second layer is a binder which is soluble or dispersible in water, such as dextrine, carboxymethyl cellulose, polyvinyl alcohol, polyvinyl acetate or a binder based on starch or starch derivative. Surprisingly it has been found that for certain binders, the bonding strength (strength in direction z, ScottBond) increases when a conductive polymer is used together with starch based binders or a conductive polymer is used with polyvinyl acetate. In particular, polyaniline increases Z-strength when used together with starch and with polyvinyl acetate. This strength increases when the concentration of the polyaniline is raised.

The binder is used in a form in which it can be applied at room temperature or at a slightly elevated temperature, such as 10 - 50 °C. This kind of a binder mixture generally comprises a binder, which is mixed or dispersed into a medium, such as water or a solvent, preferably water. The dry matter concentration of the binding composition is about 1 to 80 weight-%, preferably about 5 to 75 weight-%, depending on the binder. It is essential that the binder composition can be spread out so that it forms a film.

The optional components of the binder composition includes a second binding agent component, e.g. for starch based binders, polyvinyl alcohol or an ethylene/vinyl alcohol copolymer (amount 0-35 weight-%, typical minimum amount about 1 weight-%), when desired a tacking resin (amount 0-70 weight-%, typical minimum amount about 1 weight-%) and antioxidants (amount 0-3 weight-%, typical minimum amount about 0.1 weight-%). It can also contain anti-moulding agents and other biocides, typically about 0.1 to 3 weight-%.

In the present invention "Electrically conductive polymer" or "Conductive polymer" mean inherently conductive polymers (ICP), which are "doped" (furnished, processed) in order to generate charge carriers (holes and electrons). Common to all electrically conductive polymers are the conjugated double bonds of the backbone chain (alternate single and double bonds, delocalized silicon electron system), which enable the movement of the charge carriers. Electrically conductive polymers have both ionic and electronic conductivity, which can be utilized in various applications. The conductivity of electrically conductive polymers can fluctuate and be regulated within the whole conductivity range, from insulant to metallic conductor. Generally, a polymer is considered to be electrically conductive if its maximum resistance is 10¹¹ ohm (as surface resistance).

An electrically conductive polymer is present in the binding agent layer both in an electrically conductive and in an electrically non-conductive form. Consequently, the term "electrically conductive polymer" in the claims presented below also means a polymer that is non-conductive at the time of reference, but which, however, can be brought to an electrically conductive state, for instance by using a suitable doping agent treatment.

Polyaniline, polypyrrolidine, polyacetylene, polyparaphenyl or polytiophene, or derivatives or mixtures of them are used as electrically conductive polymers. Among the derivatives, especially the alkyd and aryl derivatives and the chlorine and bromine-substituted derivatives of the polymers mentioned above, are worth mentioning. If needed, electrically conductive particles, such as graphite or carbon black can be added, too.

Polyaniline is more preferable in the present invention. The monomer in the aniline polymer is aniline or its derivative, the nitrogen atom of which is in most cases bonded to the para-position carbon of the benzene ring of the next unit. The unsubstituted polyaniline can be in different forms, among which the emeraldine form, which is characterized by a clear, emerald-green colour, which stands for its name, is generally used for conductive polymer applications.

By using doping, the electrically neutral polyaniline can be converted into a conductive polyaniline-complex. The doping agents used in the present invention can vary widely and they are generally employed when doping conjugated polymers into an electrically conductive or semiconductive form.

Protonic acids are known doping agents in the field of inherent conductive polymers, as will appear from the references by J.-C. Chiang and Alan G. MacDiarmid and in the W. R. Salaneck citation:
o Chiang et al., Synth. Metals (1986) 13:193-205
o MacDiarmid et al., Papers from the 6th European Physical Society Industrial Workshop Eur. Phys. Soc.
o Salaneck et al., Synth. Metals (1986) 13:291-297 No Month Available.

Such doping agents comprise inorganic or organic acids, and their derivatives, among which mineral acids, sulphonic acids, picric acid, n-nitrobenzene acid, dichloric acetic acid and polymer acids are typical examples. If desired, more than one doping agent can be used.

Preferably, a functional acid is used for doping, such as a sulphonic acid, particularly an aromatic sulphonic acid, which comprises one aromatic ring, or two fused rings, in which case at least one ring may have a polar or a non-polar cyclic substituent, such as a functional group (for instance a hydroxyl group) or a hydrocarbon chain, such as an alkyl chain with 1-20 carbons. Examples of these are alkylbenzene sulphonic acids and dialkylbenzene sulphonic acids (where the alkyl comprises 1-20 carbon atoms), other branched benzene sulphonic acids, aromatic diesters of phosphoric acid, etc.

The following can be particularly mentioned:
MSAs (methylsulphonic acids),
Ethylsulphonic acids
BSAs (benzoic sulphonic acids)
TSAs (toluene sulphonic acids)
DBSAs (dodecylbenzene sulphonic acids)
Ethylbenzene sulphonic acids
PSAs (phenol sulphonic acids or hydroxybenzene sulphonic acids)
CSAs (camphor sulphonic acids)
AMPSA (2-acrylamide-1-propanesulphonic acid)
Vinylsulphonic acids
Isophthalic sulphonic acid and esters
PPA (phenyl phosphine acids)
Phosphone acetic acid,
DIOHP (bis(2-ethyl hexyl hydrogenphosphate))
Chlorobenzene sulphonic acids
Pyridine sulphonic acids
Anisidine sulphonic acids
Aniline sulphonic acids
Quinoline sulphonic acids
Naphthalene sulphonic acids
Sulphosalisylic acids
Phosphonic acids

Polymers which are functionalized at their ends by sulphonic acid [polystyrene (PSSA), polyolefins, polyethylene oxide, polyvinyls], as well as sulphonated polyparaphenylenes and sulphonated aromatic polyamides and alike substances, can be mentioned as examples of polymeric acids.

Preferred acids are dodecylbenzene sulpfonic acid (DBSA), camphor sulphonic acid, paratoluene sulphonic acid and phenol sulphonic acid.

The preparation of polyaniline complexes has been described in detail in, e.g., EP Published Patent Applications Nos. 545 729 and 582 919 and in FI Patent Applications Nos. 932557, 932578 and 940626.

Oxidizing agents are generally used to polymerize a monomeric compound into a corresponding electrically conductive polymer. Preferred oxidizing agents are polyatomic metallic salts such as iron(III) salts and per-compounds like peroxides, peracids, persulphates, perborates, permanganates, perchlorates and chlorates, nitrates and quinones. The amount of oxidizing agent in relation to the monomer is generally from 10:1 to 1:1, most preferably from about 5:1 to 2:1 (parts by weight) or from 4:1 to 1:1 as mole fractions (oxidative/monomer).

An electrically conductive polymer is mixed with a binding agent for example in a dispersion form. The most applicable way is to select a dispersion agent corresponding to the solvent of the binding agent. Hence, polyaniline can be used as a water paste in case of aqueous binding agents. The concentration of polyaniline is e.g. from 0.1 to 25 weight-%, preferably from about 0.5 to 20 weight-% and, particularly, from 5 to 17 weight-%. It is most suitable that polyaniline is in a conductive form, in which case the previously mentioned amount includes the amount of the doping agent. The amount of polyaniline (without the doping agent) is generally from about 0.1 to 15 weight-%). Concerning nonaqueous glues, polyaniline is added to organic solvents (for example toluene) in a dispersed state. The same amounts, as described previously, are used.

According to the invention, this results in an adhesive mixture where the concentration of the electrically conductive polymer (with doping agents) is from about 0.1 to 15 %, preferably from about 0.1 to 10 %, of the weight of the mixture. The concentration of the electrically conductive polymer in the adhesive layer, which has been prepared like this mixture, is from about 0.1 to 10 weight-%, typically from about 0.5 to 7 weight-%.

The binding agent together with the electrically conductive polymer builds basically a "homogeneous" mixture. In that case, the homogeneity of the mixture is observed visually and as a layer on the top of the cardboard where the mixture appears homogeneous. However, in practice, each mixture is a dispersion to some extent, including also tiny particles. Hence, generally a mixture is not completely homogeneous.

In mixing components together, the pH value is preferably kept on the acidic side provided that the electrically conductive polymer is brought in a conductive form and its conductivity is not desired to change. The most adequate pH value is from 1 to 6.5 and most preferably, from about 1.5 to 5.

The laminate in accordance with the invention is used for entering electric information as well as communication and building security symbols. In order to achieve these objectives, the conductivity of the electrically conductive polymer in the second layer has been changed locally to form an electrically conductive design or a non-conductive design, respectively.

The electric conductivity of the polymer is changed by means of doping a non-conductive polymer or dedoping an electrically conductive polymer, respectively. A non-conductive polymer is doped by treating the polymer layer with acid solution and the desired design is painted on the surface of the paper or cardboard product by the solution. Alternatively, an electrically conductive polymer is dedoped by treating the polymer layer by alkali solution and the desired design is painted on the surface of the paper or cardboard product by the solution. Doping or dedoping, respectively, can be achieved by printing the desired design on the surface of a paper or a cardboard product by using printing ink capable of doping or dedoping the electrically conductive polymer.

Different kinds of acid or alkali solutions, respectively, are suitable for doping or dedoping. In acid solutions, the same acids as in the doping of the conductive polymer can be used (see above) or alternatively, different acids can be used. Conventional hydroxides and carbonates (alkali metal and alkali earth metal hydroxides and carbonates) and different kinds of amines can be used as bases. Sodium hydroxide, potassium hydroxide and sodium carbonate are common bases. Generally, acids and bases are used as relatively dilute solutions (about 0.01 to 5 N, e.g. about 0.1 to 1 N solutions) to avoid brittleness of the fibre-matrix.

The surface of the multilayered product is preferably provided with a visual marking indicating the layer containing the electrically conductive polymer, which marking discloses what kind of information the layered product contains. Thus, for example, the surface of the paper or cardboard product is provided with a printed pattern, which indicates how the electrical conductivity of the second layer can be detected.

The forming of security marks has been described in more detail in our parallel Finnish patent application ("Paper or cardboard based authenticity product"), which was filed on 1 April 2003.

A multilayered product can be produced by lamination techniques known *per se* using a mixture described above as an adhesive agent, said mixture containing a synthetic, electrically conductive polymer mixed with a binder, and by applying this binder mixture on top of the first fibrous layer, and then bringing a second fibrous layer on top of the binder layer. The binder can, if desired, be applied simultaneously on both fibrous layers or, rather, between them. The binder mixture can be applied using a roll, a rod, by spraying, atomizing or brushing. The binder mixture can also be fed from the orifice of the adhesive agent in the form of a continuous layer or film, which provides for non-contact application (the distance between the nozzle and the fibrous layer can be about 1 to 50 mm).

The application aims at bringing on the surface of the fibrous layer a binder layer which is at least partially continuous and which, after application, is attached thereto. If the electrically conductive polymer is in electrically conductive form, it is preferred to apply it on a fibrous web which is acid or, at the most, slightly alkaline, in order to maintain an unchanged electrical conductivity of the polymer. Preferably, the pH of the fibrous web is, in this case, 8 at the most.

The following examples illustrate the invention. They indicate more closely the details of the preferred embodiments of the invention.

### Summary of the examples

In the examples, an electrically conductive binder was produced, which can be employed for producing a paper laminate. The binder was manufactured in such a way that an electrically conductive polymer, in this case polyaniline, was mixed in the form of a dispersion into the binder used for making a paper laminate. The resulting electrically conductive, greenish binder can be spread between two paper webs.

Binders which are suitable for this purpose are the following:
1. Dextrin, Swift 37192, Fohl, Reichold. Dry substance 62.4 %, pH 6.6.
2. Carboxymethyl cellulose, CMC, TKK. Dry substance 10 %.
3. Polyvinyl alcohol, Elvanol 71-30. Aqueous solution, dry substance 7.5 % or 10 %.
4. Polyvinyl alcohol, Elvanol 90-50. Aqueous solution, dry substance 10 %.
5. Polyvinyl alcohol, Elvanol 85-30. Aqueous solution, dry substance 10 %.
6. Polyvinyl acetate, Swift 48124, Fohl, Reichold. Dry substance 57.2 %, pH 7.1.
7. Tackidex C 172, Dry substance 40 %, pH <7.
8. Starch glue DL20-1, VTT. Dry substance 50 %, pH <7.
9. Starch dispersion 7DIPK500, VTT. Dry substance 43.7 %, pH 3.0.

The electrically conductive polymer was an aqueous 9.1 % dispersion of polyaniline, having dodecylbenzenesulphonic acid as a counter ion. In one test, an aqueous 8.2 % dispersion of polyaniline was used, having p-toluene sulphonic acid as a counter-ion.

Primarily, in the mixtures, less than 3 % of polyaniline was used, based on the amount of the whole mixture, which was a sufficient amount to provide the required electrical conductivity. Only in two mixtures, a greater amount of polyaniline was used. For producing the mixtures a table top dispergator WMA Getzman was used employing a suitable shearing blade for each sample. The mixing rates were typically 1000 to 6000 rpm so that no air was allowed to pass into the sample. The electrical conductivity was considered to be sufficiently high when the surface resistivity of a sample of the binder was 10exp4 Ohm.

The glue sample of which the surface resistivity was measured, was a layer applied on a cardboard by using a metallic spiral rod. Several rods were used in the testing, resulting in various thickness of the glue layer on the top of the cardboard. The thinnest layer was done with the rod 0 (smooth) and the thickest one with the rod 4 (spiral depth of 0.25 mm). The cardboard used in the test was M-real's Avanta Prima cardboard where the pH of the coarser side, in other words the pH of the background, was from 7.5 to 8 and the pH of the smooth side was from 8 to 8.5. The glue tests were done on the coarser side because partial dedoping of polyaniline was observed, caused by the elevated pH of the smooth side. The resistivity on the smooth side rose from two to four decades and the adhesion of the glue on the surface was not as good as it was on the coarse side.

Examples 1 to 21 disclose which binders have been used.

It was decided to use the following binders for the small scale laminating tests that were carried out at TKK (Technical University of Helsinld): Elvanol 85-30 containing polyvinyl alcohol based borax, polyvinyl acetate Swift 48124 and starch size DL20-1. For these tests, binders with two different polyaniline concentrations were prepared of polyvinyl alcohol and starch. In addition, a blank test without any polyaniline was done in the gluing. Only one polyaniline containing binder was prepared of polyvinyl acetate. The Z-strength and brightness (Y-value) were tested of the laminates and the viscocity was tested of the glue as a function of the polyaniline concentration.

Furthermore, after these tests, a glue for the pilot scale test was prepared from Elvanol 85-30, a polyvinyl alcohol containing borax, and an aqueous dispersion of polyaniline.

### Separate preparation examples

### EXAMPLE 1. Electrically conductive dextrin binder.

Forty grams of a dextrin binder (Swift 37192, solids content 62.4 %), was put in a plastic cup. Then, 15 g of an aqueous dispersion of polyaniline was added. The dispersion was mixed for 15 to 20 minutes using a dissolver. As a result, a very dark green, homogeneous dispersion was obtained. Then, 4 ml was applied on cardboard using the rod 4. The cardboard was dried in an incubator, at the temperature of 105°C for 10 minutes. After drying, the cardboard was let to normalize for about one hour. Thereafter, the surface resistance was measured from the top of the binder film. The measurement of resistance was repeated about one month after the first measurement. The surface resistance of the binder film remained unchanged, 10exp8 Ω.

### EXAMPLE 2. Electrically conductive dextrin binder.

Forty grams of an aqueous solution of dextrin (Tackidex C172, solids content 40 %), was put in a plastic cup. Then, 7.5 g of an aqueous dispersion of polyaniline was added. As a result, a very dark green, easily spreading dispersion with low viscosity was obtained. Applying on cardboard, drying and measurements as in Example 1. After one month, the surface resistance of the binder film remained unchanged, 10exp8 Ω.

### EXAMPLE 3. Electrically conductive dextrin binder.

Forty grams of an aqueous solution of dextrin (Tackidex C172, solids content 40 %), was put in a plastic cup. Then, 8.5 g of an aqueous dispersion of polyaniline was added. As a result, a very dark green, easily spreading dispersion with low viscosity was obtained. Applying on cardboard, drying and measurements as in Example 1. After on month, the surface resistance of the binder film remained unchanged, 10exp7 Ω.

### EXAMPLE 4. Electrically conductive polyvinyl alcohol binder.

Forty grams of an aqueous solution of polyvinyl alcohol (Elvanol 71-30, solids content 7.5%) was put in a plastic cup. Then, 3.9 g of an aqueous dispersion of polyaniline was added. As a result, a very dark green, easily spreading dispersion with low viscosity was obtained. Applying on cardboard was done using the smooth rod 0. Drying and measurements as in Example 1. After one month, the surface resistance of the binder film remained unchanged, 10exp7 Ω.

### EXAMPLE 5. Electrically conductive polyvinyl alcohol binder.

Forty grams of an aqueous solution of polyvinyl alcohol (Elvanol 71-30, solids content 10%) was put in a plastic cup. Then, 4.0 g of aqueous dispersion of polyaniline was added. As a result, a very dark green, easily spreading dispersion with low viscosity was obtained. Applying on cardboard was done using the smooth rod 0. Drying and measurements as in Example 1. After on month, the surface resistance of the binder film remained unchanged, 10exp7 Ω.

### EXAMPLE 6. Electrically conductive polyvinyl alcohol binder.

Forty grams of an aqueous solution of polyvinyl alcohol (Elvanol 90-50, solids content 10%) was put in a plastic cup. Then, 3.8 g of an aqueous dispersion of polyaniline was added. As a result, a very dark green, easily spreading dispersion with low viscosity was obtained. Applying on cardboard was done using the rod 1. Drying and measurements as in Example 1. After one month, the surface resistance of the binder film remained unchanged, 10exp7 Ω.

### EXAMPLE 7. Electrically conductive polyvinyl alcohol binder.

As in EXAMPLE 6, except that applying on cardboard was done using the rod 4. After one month, the surface resistance of the binder film remained unchanged, 10exp6 Ω.

### EXAMPLE 8. Electrically conductive polyvinyl alcohol binder.

Forty grams of an aqueous solution of polyvinyl alcohol (Elvanol 85-30, solids content 10%) was put in a plastic cup. Then, 4.2 g of an aqueous dispersion of polyaniline was added. As a result, a very dark green, easily spreading dispersion with low viscosity was obtained. Applying on cardboard was done using the rod 1. Drying and measurements as in Example 1. After one month, the surface resistance of the binder film remained unchanged, 10exp6 Ω.

### EXAMPLE 9. Electrically conductive polyvinyl alcohol binder.

Forty grams of an aqueous solution of polyvinyl alcohol (Elvanol 85-30, solids content 10%) was put in a plastic cup. Then, 8.5 g of an aqueous dispersion of polyaniline was added. As a result, a very dark green, easily spreading dispersion with low viscosity was obtained. Applying on cardboard was done using the rod 4. Drying and measurements as in Example 1. After one month, the surface resistance of the binder film remained unchanged, 10exp5 Ω.

### EXAMPLE 10. Electrically conductive polyvinyl acetate binder.

Forty grams of an aqueous solution of polyvinyl acetate (Swift 48124, solids content 57.2 %) was put in a plastic cup. Then, 3.9 g of an aqueous dispersion of polyaniline was added. As a result, a dark green, easily spreading, pastelike binder was obtained. Applying on cardboard was done using the rod 4. Drying and measurements as in Example 1. After one month, he surface resistance of the binder film remained unchanged, 10exp8 Ω.

### FXANIPLE 11. Electrically conductive polyvinyl acetate binder.

Forty grams of an aqueous solution of polyvinyl acetate (Swift 48124, solids content 57.2 %) was put in a plastic cup. Then, 5.0 g of an aqueous dispersion of polyaniline was added. As a result, a dark green, easily spreading, pastelike binder was obtained. Applying on cardboard was done using the rod 1. Drying and measurements as in Example 1. After one month, the surface resistance of the binder film remained unchanged, 10exp9 Ω.

### EXAMPLE 12. Electrically conductive polyvinyl acetate binder.

Forty grams of aqueous solution of polyvinyl acetate (Swift 48124, solids content 57.2 %) was put in a plastic cup. Then, 7.7 g of aqueous dispersion of polyaniline was added. As a result, a dark green, highly viscous, easily spreading, pastelike binder was obtained. Applying on cardboard was done using the rod 4. Drying and measurements as in Example 1. After one month, the surface resistance of the binder film remained unchanged, 10exp6 Ω.

### EXAMPLE 13. Electrically conductive polyvinyl acetate binder.

Forty grams of an aqueous solution of polyvinyl acetate (Swift 48124, solids content 57.2 %) was put in a plastic cup. Then, 14 g of aqueous dispersion of polyaniline was added. As a result, a dark green, pastelike binder was obtained. Flocculants began to form in the binder. Applying on cardboard was done using the rod 4. Drying and measurements as in Example 1. After one month, the surface resistance of the binder film remained unchanged, 10exp5 Ω.

### EXAMPLE 14. Electrically conductive carboxy-methylcellulose binder.

Forty grams of an aqueous solution of carboxy-methylcellulose (CMC, solid contents 10 %) was put in a plastic cup. Then, 3.9 g of an aqueous dispersion of polyaniline was added. As a result, a very dark green, easily spreading dispersion with low viscosity was obtained. Applying on cardboard was done using the smooth rod 0. Drying and measurements as in Example 1. After one month, the surface resistance of the binder film remained unchanged, 10exp9 Ω.

### EXAMPLE 15. Electrically conductive carboxy-methylcellulose binder.

As in EXAMPLE 14, except that applying on cardboard was done using the rod 4. Drying and measurements as in Example 1. The surface resistance of the binder film remained unchanged, 10exp8 Ω.

### EXAMPLE 16. Electrically conductive starch binder.

Forty grams of an aqueous starch glue (DL20-1, solids content 50 %), was put in a plastic cup. Then, 5.0 g of an aqueous dispersion of polyaniline was added. As a result, a very dark green, highly viscous, easily spreading dispersion was obtained. It was applied on cardboard using the smooth rod 0. Drying and measurements as in Example 1. The surface resistance of the binder film remained unchanged, 10exp9 Ω, after one month.

### EXAMPLE 17. Electrically conductive starch binder.

Forty grams of an aqueous starch glue (DL20-1, solids content 50 %), was put in a plastic cup. Then, 9.8 g of an aqueous dispersion of polyaniline was added. As a result, a very dark green, highly viscous, easily spreading dispersion was obtained. It was applied on cardboard using the rod 4. Drying and measurements as in Example 1. After one month, the surface resistance of the binder film remained unchanged, 10exp7 Ω,.

### EXAMPLE 18. Electrically conductive starch binder.

Forty grams of an aqueous starch glue (DL20-1, solids content 50 %), was put in a plastic cup. Then, 13.2 g of an aqueous dispersion of polyaniline was added. As a result, a very dark green, easily spreading dispersion was obtained. It was applied on cardboard using the rod 1. Drying and measurements as in Example 1. After one month, the surface resistance of the binder film remained unchanged, 10exp6 Ω.

### EXAMPLE 19. Electrically conductive starch binder.

As in EXAMPLE 18, except that applying on cardboard was done using the rod 4. Drying and measurements as in Example 1. After one month, the surface resistance of the binder film remained unchanged, 10exp5 Ω.

### EXAMPLE 20. Electrically conductive starch binder.

Forty grams of a starch binder dispersed in water (7DIPK500, solids content 43,7 %), was put in a plastic cup. Then, 2.7 g of an aqueous dispersion of polyaniline was added. As a result, a dark green, easily spreading, pastelike dispersion was obtained. It was applied on cardboard using the rod 4. Drying and measurements as in Example 1. After one month, the surface resistance of the binder film remained unchanged, 10exp8 Ω.

### EXAMPLE 21. Electrically conductive starch binder.

Forty grams of a starch binder dispersed in water (7DIPK500, solids content 43,7 %), was put in a plastic cup. Then, 3.3 g of an aqueous dispersion of polyaniline was added. As a result, a dark green, viscous, pastelike dispersion was obtained. The dispersion flocculates within less than 24 hours after preparation. It was applied on cardboard using the rod 4. Drying and measurements as in Example 1. After one month, the surface resistance of the binder film remained unchanged, 10exp8 Ω.

**TABLE I. Summary of the results of Examples 1 to 21.**

| Binder | Polyaniline % in dry substance | Polyaniline % in mixture | Surface resistance. on cardboard Ω | Rod | NB |
|---|---|---|---|---|---|
| Dextrin Swift Solids content 62.4 % | 5.18 | 2.5 | 10exp8 | 4 | Very dark dispersion |
| CMC, 10 % | 8.8 | 0.8 | 10exp9 | 0 | Very dark, homogeneous dispersion |
| | 8.8 | 0.8 | 10exp8 | 4 | |
| PVA, Elvanol 71-30 Solids content 7.5 % | 10.6 | 0.8 | 10exp7 | 0 | Very dark, homogeneous dispersion |
| PVA, Elvanol 71-30 Solids content 10 % | 8.3 | 0.82 | 10exp7 | 0 | Very dark, homogeneous dispersion |
| PVA Elvanol 90-50 Solids content 10 % | 8 | 0.8 | 10exp7 | 1 | Very dark, homogeneous dispersion |
| | 8 | 0.8 | 10exp6 | 4 | |
| PVA Elvanol 85-30 Solids content 10 % | 8.7 | 0.86 | 10exp6 | 1 | Very dark, homogeneous dispersion |
| | 16.2 | 1.6 | 10exp5 | 4 | |
| PVAc Swift 48124 | 1.53 | 0.8 | 10exp8 | 4 | Homogeneous, green paste |
| | 1.95 | 1.0 | 10exp9 | 1 | |
| | 2.97 | 1.47 | 10exp6 | 4 | |
| | 5.27 | 2.4 | 10exp5 | 4 | |
| Tackidex C172 Solids content 40 % | 4.1 | 1.4 | 10exp8 | 4 | Very dark, low viscosity |
| | 4.6 | 1.6 | 10exp7 | 4 | |
| Starch dispersion 7DIPK500 Solids content 43.7 % | 1.39 | 0.58 | 10exp8 | 4 | Green paste, low durability, flocculating |
| | 1.69 | 0.7 | 10exp6 | 4 | |
| Starch DL20-1 Solids content 50% | 2.22 | 1.0 | 10exp9 | 0 | Homogeneous, dark green dispersion |
| | 4.27 | 1.8 | 10exp7 | 4 | |
| | 5.67 | 2.26 | 10exp6 | 1 | |
| | 5.6 | 2.26 | 10exp5 | 4 | |

### EXAMPLE 22. Electrically conducting polyvinyl alcohol binder

Ten grams of an aqueous solution of polyvinyl alcohol (Elvanol 71-30, solids content 10 %), was put in a glass jar. Then, 27 g of an aqueous dispersion of polyaniline was added (p-TSA as a counter-ion, solids content 8.2 %). Mixing for 20 minutes and as a result, a black dispersion was obtained. It was applied on cardboard using the rod 4. Drying and measurements as in Example 1. The surface resistance of the binder film was10exp6 Ohm.

### LAMINATING TESTS

### EXAMPLE 23. Polyvinyl alcohol binder for laminating tests.

Seven hundred grams of an aqueous solution of polyvinyl alcohol was put in two jars (Elvanol 85-30, solids content 10 %). Then, 75 g of an aqueous dispersion of polyaniline was added in one jar and 150 g into another. The dispersion was mixed for 30 minutes with a dissolver. As a result, two very dark green, easily spreading dispersions were obtained, with polyaniline concentrations of 0.88 % and 1.6 % of the whole mixture. The binders were sent to TKK for laminating tests.

### EXAMPLE 24. Starch binder for laminating tests.

Seven hundred grams of a water soluble starch binder was put in two jars (DL20-1, solids content 50%). Then, 114 g of an aqueous dispersion of polyaniline was added in one jar and 231 g in the other jar. The dispersion was mixed for 30 minutes with a dissolver. As a result, two very dark green, easily spreading dispersions were obtained, with polyaniline concentrations of 1.27 % and 2.26 % of the whole mixture. The binders were sent to TKK for laminating tests.

### EXAMPLE 25. Electrically conducting polyvinyl acetate binder.

A total of 120 g of an aqueous dispersion of polyvinyl acetate (Swift 48124, solid contents 57.2%) was put in a plastic cup. Then, 20 g of an aqueous dispersion of polyaniline was added. The dispersion was mixed for 30 minutes with a dissolver. As a result, a dark green, paste-like dispersion was obtained, with polyaniline concentration of 1.3% of the whole mixture. The sample was sent to TKK for laminating tests.

Viscosities of glues were analysed at TKK before the lamination by using Brookfield 2000 viscometer at the temperature of 25°C, spindle no. 5 with a rotation speed of 100 rpm. The results are presented in Table II.

**TABLE II. Influence of polyaniline on the viscosity of binders Determined by the Brookfield method at a temperature of 25 °C. Spindle no. 5 and rotational speed 100 rpm.**

| Binder | Polyaniline of binder, % | Viscosity, P |
|---|---|---|
| Starch DL20-1 | 0 | 684 |
| | 1.27 | 1056 |
| | 2.26 | 4290 |
| PVOH, Elvanol 85-30 | 0 | 2520 |
| | 0.88 | 3280 |
| | 1.6 | 4920 |
| PVAc, Swift 48124 . | 0 | 87 |
| | 1.3 | 356 |

As can be noted from Table II, the viscosity of the binder increases when the concentration of polyaniline grows.

### PAPER LAMINATES

At TKK a laminate was manufactured from two papers with the aid of binders. The binder was applied on the lower sheet of the laminate with a manual rod (rod no. 0). Immediately after the application of the binder, the sheets were pressed together with a planar press at room temperature. The laminates were also dried under light pressure at room temperature.

The paper laminates were tested for strength of gluing, i.e. z-strength, and brightness.
The z-strength of the paper laminate was tested according to TAPPI Standard T 569 pm-1. The brightness of the paper laminate (Y-value) was measured by the test method SCAN-P 8:93. The results are given in Table III.

**TABLE III. Z-strength and brightness (Y-value) of paper laminates using different binders and varying polyaniline concentrations of the binders.**

| Binder | Polyaniline concentration, % | z-strength, Scott bond, J/m² | Y-brightness, % |
|---|---|---|---|
| Starch DL20-1 | 0 | 341 | 83.9 |
| | 1.27 | 381 | 79.8 |
| | 2.26 | 450 | 74.7 |
| PVOH, Elvanol 85-30 | 0 | 501 | 84.1 |
| | 0.88 | 490 | 76.9 |
| | 1.6 | 503 | 76.7 |
| PVAc, Swift 48124 | 0 | 314 | 83.0 |
| | 1.3 | 406 | 78.2 |

It appears from Table III that the polyaniline concentration of the binder did not have any influence on the z-strength for polyvinyl alcohol whereas for starch and polyvinyl acetate, the z-strength increases when the concentration of the polyaniline grows.

The brightness of the laminates decreases when the amount of polyaniline among the binder increases. The natural explanation for the drop of brightness is the dark green colour of the polyaniline.

### PILOT-SCALE LAMINATION TEST

For a pilot-scale lamination test, 7554 g of an aqueous dispersion of 10 % polyaniline was prepared, the dispersion further containing 1.28 % polyvinyl alcohol Elvanol 85-30. This was used as a premixture for a larger batch of 66 kg polyvinyl alcohol binder, which was prepared at KCL.

For the pilot-scale lamination tests, first 200 litres of a polyvinyl alcohol binder was produced by adding a powder of Elvanol 85-30 (PVOH+boric acid +fumaric acid) in cold water under stirring. Mixing was continued until a uniform mixture was obtained. Direct-steam heating was carried out for about 30 minutes at >90°C. The mixture was allowed to cool while stirring. The polyvinyl alcohol concentration of the binder was 9 % and the viscosity thereof was 510 cP.

An amount of 60 kg of the afore-described binder was placed in another mixing vessel to which 6 kg of an aqueous dispersion of polyaniline was added under stirring. Mixing was continued until a uniform mixture was obtained. The polyaniline concentration of the mixture was about 0.9 % and the viscosity was 560/620 cP.

### MANUFACTURE OF LAMINATE

Two paper webs made on a pilot paper machine were glued together on a lamination machine. The fibre composition of the paper employed was 70 % mechanical pulp and 30 % deciduous chemical pulp (+ 30 % filler, kaolin, and 0.6 % starch). Running pH was 5.0. The grammage of the paper was about 45 g/m² and the width of the web was 55 cm. The binder was applied using a roll. The binder used comprised the mixture of polyvinyl alcohol and polyaniline at two different dosages. The binder amounts determined from the laminates were about 1- 3.5 g/m². The set value for the drying temperature was 150°C and the speed of the lamination machine was 42 m/min.

Binder concentration, grammage, surface resistance, internal bond strength and brightness were determined from the ready paper laminate. The surface resistivities were measured from both sides of the paper using a standard method, ASTM D257-93, for determining the resistivity of paper. In the method, the sample is placed between two electrodes. The lower, circular central electrode is surrounded by a second peripheral electrode. The surface resistivity is measured from the voltage between the lower central electrode and the peripheral electrode, while an upper electrode eliminates the errors caused by conductivity of the paper in the thickness direction. The apparatus consisted of a high-resistivity tester, model HP 4339A, and a measurement geometry of model HP 16008B. The measuring temperature was 23°C, the relative humidity was 20 % RH, the measuring voltage was 100 DC V and the charging time was 30.0 s. Table IV gives the surface resisitivities measure for the pilot laminates and Table V indicates the strength and brightness values.

**TABLE IV. Surface resistivities of pilot laminates glued by a mixture of polyvinyl alcohol and polyaniline. References comprise a base paper before lamination and a laminate glue with only polyvinyl alcohol. The results are the averages for 10 measurements.**

| Sample | Ts/surface Average Ω/□ | Ts/surface Deviation Ω/□ | Bs/base Average Ω/□ | Bs/base Deviation Ω/□ |
|---|---|---|---|---|
| Base paper | 3.01E+13 | 5.80E+12 | 6.21E+13 | 8.03E+13 |
| PVOH 1.1 g/m² | 1.18E+14 | 1.34E+14 | 8.43E+13 | 4.82E+13 |
| PAN+PVOH 1.8 g/m² | 1.01E+14 | 1.56E+14 | 8.22E+13 | 4.20E+13 |
| PAN+PVOH 3.4 g/m² | 3.76E+13 | 1.47E+13 | 4.21E+13 | 1.28E+13 |

In this case, the resistivities were measured from the surfaces of the laminates, whereby - in both cases - there is an insulating paper layer on top of the conducting layer and therefore the conductivity has been measure for the insulating layer. The table indicates that the conductive binder layer has not penetrated through the paper but it is located at the desired place between the paper laminates. It is possible to treat the second layer by impregnating it through the first layer with acid or base.

**TABLE V. Strength and brightness values for pilot laminates glued with a mixture of polyvinyl alcohol and polyaniline. Reference comprised a laminated glued merely with PVOH.**

| | Binder concentration, g/m² | Grammage, g/m² | Internal Bond Strength, J/m² | Brightness, % |
|---|---|---|---|---|
| Polyvinyl alcohol (PVOH) | 1.1 | 94.4 | 230 | 76.9 |
| PVOH + polyaniline | 1.8 | 95.1 | 122 | 73.7 |
| PVOH + polyaniline | 3.4 | 96.7 | 354 | 71.8 |

## Claims

1. Multilayered product comprising
- at least one first layer, which is formed by cellulosic or lignocellulosic fibres, and
- at least one second layer, which is fitted adjacent to the first layer or at a distance therefrom,
**characterized in that**
- the second layer contains a synthetic, electrically conductive polymer, which is mixed with a binder which forms a binder matrix, the second layer being at least partially electrically conductive, and
- the electrical conductivity of the electrically conductive polymer of the second layer is locally adjusted to form a pattern of electrical conductivity or electrical non-conductivity, respectively.

2. The multilayered product according to claim 1, **characterized in that** the binder forms a homogeneous mixture together with the electrically conductive polymer.

3. The multilayered product according to claim 1, **characterized in that** the binder of the second layer comprises a binder that dissolves or disperses in water.

4. The multilayered product according to claim 3, **characterized in that** the binder comprises dextrin, carboxymethyl cellulose, polyvinyl alcohol, polyvinyl acetate or a binder based on starch or a starch derivative.

5. The multilayered product according to any of the preceding claims, **characterized in that** it comprises two first layers which have been bonded together by a second layer fitted inbetween them.

6. The multilayered product according to claim 5, **characterized in that** the first layers are formed by fibrous webs.

7. The multilayered product according to claim 6, **characterized in that** the fibrous webs are formed by unsymmetrical paper or cardboard webs.

8. The multilayered produced according to any of the preceding claims, **characterized in that** it further comprises a third layer which is arranged on top of the first or the second layer.

9. The multilayered product according to claim 8, **characterized in that** the third layer is formed by a plastic film, which has been extruded on the surface of the product.

10. The multilayered product according to claims 8, **characterized in that** the third layer is formed by a layer of a coating colour.

11. The multilayered product according to any of the preceding claims, **characterized in that** the second layer contains an electrically conductive polymer selected from the group of polyaniline, polypyrrol and polythiophene.

12. The multilayered product according to any of the preceding claims, **characterized in that** concentration of the electrically conductive polymer in the second layer is about 0.1 to 10 weight-%.

13. The multilayered product according to claim 12, **characterized in that** surface resistivity of the second layer is about 10exp2 to 10exp11 Ohm.

14. The multilayered product according to any of the preceding claims, **characterized in that** the surface of the multilayered product is provided with a visual marking which indicates the layer containing the electrically conductive polymer.

15. Method for producing a multilayered product, which method comprises producing
- at least one fibrous layer, which is formed by cellulosic or lignocellulosic fibres, and
- at least one layer of an adhesive agent arranged on top of the fibrous layer,
**characterized in that**
- layer of the adhesive agent is formed from a mixture, which contains synthetic, electrically conductive polymer, which is mixed with a binder,
- this mixture is applied upon the fibrous layer, and
- the electrical conductivity of the polymer is changed by doping the electrically conductive polymer or by dedoping the electrically conductive polymer, respectively.

16. The method according to claim 15, **characterized in that** binder mixture is applied as an at least partially continuous layer on top of the fibrous layer and is allowed to attach thereto.

17. The method according to claim 15 or 16, **characterized in that** the binder is used for attaching two fibrous layers to each other.

18. The method according to any of claims 15 to 17, **characterized in that** the electrically conductive polymer is mixed in the form of a dispersion into the binder.

19. The method according to any of claims 15 to 18, **characterized by** producing a binder mixture in which the concentration of the electrically conductive polymer is about 0.1 to 10 % of the weight of the mixture.

20. The method according to any of claims 15 to 19, **characterized in that** the binder is water-soluble or water-dispersable, and it comprises, e.g., dextrin, carboxymethyl cellulose, polyvinyl alcohol, polyvinyl acetate or a binder based on starch or a starch derivative.

21. The method according to any of claims 15 to 20, **characterized in that** the electrically conductive polymer is used in doped form.

22. The method according to claim 21, **characterized in that** the electrically conductive polymer is mixed with the binder at acid pH, preferably at a pH of 1 to 6.5.

23. The method according to any of claims 15 to 22, **characterized in that** the surface resistivity of the binder layer formed can be adjusted to a value in the range of 10exp2 to 10exp11.

24. The method according to any of claims 15 to 23, **characterized in that** the binder mixture is applied on a fibrous web having a pH of 8 at the most.

25. The method according to claim 15, **characterized in that** the electrically non-conductive polymer is doped by treating the polymer layer with an acid solution, which is used for painting a desired pattern on the surface of the paper or cardboard product.

26. The method according to claim 15, **characterized in that** the electrically conductive polymer is dedoped by treating the polymer layer with an alkaline solution, which is used for painting a desired pattern on the surface of the paper or cardboard product.

27. The method according to any of claims 15, 25 or 26, **characterized in that** electrically conductive polymer is doped by printing a desired pattern on the surface of the paper or cardboard product by using a printing colour which is capable of doping or dedoping the electrically conductive polymer.

28. The method according to any of claims 15 to 27 **characterized in that** a pattern is printed on the surface of the paper or cardboard product for indicating how the electrical condutivity of the second layer can be detected.

29. The method according to any of claims 15 to 28, **characterized in that** a third layer is fitted upon the first or the second layer.

30. The method according to claim 29, **characterized in that** the third layer is formed by a plastic film, which is extruded on top of the product.

31. The method according to claim 29, **characterized in that** the third layer is formed by a layer of a coating colour.

## Patentansprüche

1. Mehrschichtiges Produkt, das
- mindestens eine erste Schicht, die aus cellulosehaltigen oder lignocellulosehaltigen Fasern gebildet wird, und
- mindestens eine zweite Schicht, die benachbart zu der ersten Schicht oder in einem Abstand davon sitzt,
umfasst, **dadurch gekennzeichnet, dass**
- die zweite Schicht ein synthetisches, elektrisch leitfähiges Polymer enthält, welches mit einem Bindemittel gemischt ist, das eine Bindemittelmatrix bildet, wobei die zweite Schicht mindestens teilweise elektrisch leitfähig ist, und
- die elektrische Leitfähigkeit des elektrisch leitfähigen Polymers der zweiten Schicht lokal angepasst ist, um ein Muster von elektrischer Leitfähigkeit bzw. elektrischer Nicht-Leitfähigkeit zu bilden.

2. Das mehrschichtige Produkt gemäß Anspruch 1, **dadurch gekennzeichnet, dass** das Bindemittel zusammen mit dem elektrisch leitfähigen Polymer eine homogene Mischung bildet.

3. Das mehrschichtige Produkt gemäß Anspruch 1, **dadurch gekennzeichnet, dass** das Bindemittel der zweiten Schicht ein Bindemittel umfasst, das sich in Wasser auflöst oder dispergiert.

4. Das mehrschichtige Produkt gemäß Anspruch 3, **dadurch gekennzeichnet, dass** das Bindemittel Dextrin, Carboxymethylcellulose, Polyvinylalkohol, Polyvinylacetat oder ein Bindemittel, das auf Stärke oder einem Stärkederivat basiert, umfasst.

5. Das mehrschichtige Produkt gemäß einem der vorangegangenen Ansprüche, **dadurch gekennzeichnet, dass** es zwei erste Schichten umfasst, die durch eine zweite Schicht, die zwischen diesen sitzt, zusammengebunden werden,

6. Das mehrschichtige Produkt gemäß Anspruch 5, **dadurch gekennzeichnet, dass** die ersten Schichten durch faserförmige Bahnen gebildet werden.

7. Das mehrschichtige Produkt gemäß Anspruch 6, **dadurch gekennzeichnet, dass** die faserförmigen Bahnen durch unsymmetrische Papier- oder Kartonbahnen gebildet werden.

8. Das mehrschichtige Produkt gemäß einem der vorangegangenen Ansprüche, **dadurch gekennzeichnet, dass** es weiter eine dritte Schicht umfasst, die oben auf der ersten oder zweiten Schicht angeordnet ist.

9. Das mehrschichtige Produkt gemäß Anspruch 8, **dadurch gekennzeichnet, dass** die dritte Schicht durch einen Kunststofffilm gebildet wird, der auf der Oberfläche des Produktes extrudiert wurde.

10. Das mehrschichtige Produkt gemäß Anspruch 8, **dadurch gekennzeichnet, dass** die dritte Schicht durch eine Schicht aus einer Beschichtungsfarbe gebildet wird.

11. Das mehrschichtige Produkt gemäß einem der vorangegangenen Ansprüche, **dadurch gekennzeichnet, dass** die zweite Schicht ein elektrisch leitfähiges Polymer enthält, das aus der Gruppe von Polyanilin, Polypyrrol und Polythiophen ausgewählt wird.

12. Das mehrschichtige Produkt gemäß einem der vorangegangenen Ansprüche, **dadurch gekennzeichnet, dass** die Konzentration des elektrisch leitfähigen Polymers in der zweiten Schicht ungefähr 0.1 bis 10 Gew.-% ist.

13. Das mehrschichtige Produkt gemäß Anspruch 12, **dadurch gekennzeichnet, dass** der Oberflächenwiderstand der zweiten Schicht ungefähr 10² bis 10¹¹ Ohm ist.

14. Das mehrschichtige Produkt gemäß einem der vorangegangenen Ansprüche, **dadurch gekennzeichnet, dass** die Oberfläche des mehrschichtigen Produkts mit einer sichtbaren Markierung bereitgestellt wird, welche die Schicht anzeigt, die das elektrisch leitfähige Polymer enthält.

15. Verfahren zur Herstellung eines mehrschichtigen Produkts, wobei das Verfahren die Herstellung
- mindestens einer faserförmigen Schicht, die aus cellulosehaltigen oder lignocellulosehaltigen Fasern gebildet wird, und
- mindestens einer Schicht eines Adhäsivmittels, die oben auf der faserförmigen Schicht angeordnet ist, umfasst, **dadurch gekennzeichnet, dass**
- die Schicht des Adhäsivmittels aus einer Mischung gebildet wird, die ein synthetisches, elektrisch leitfähiges Polymer, das mit einem Bindemittel gemischt wird, enthält,
- diese Mischung auf die faserförmige Schicht aufgebracht wird, und
- die elektrische Leitfähigkeit des Polymers durch Dotieren des elektrisch leitfähigen Polymers bzw. durch Entdotieren des elektrisch leitfähigen Polymers geändert wird.

16. Das Verfahren gemäß Anspruch 15, **dadurch gekennzeichnet, dass** die Bindemittelmischung als eine mindestens teilweise regelmäßige Schicht oben auf der faserförmigen Schicht aufgebracht wird und daran binden kann.

17. Das Verfahren gemäß Anspruch 15 oder 16, **dadurch gekennzeichnet, dass** das Bindemittel zum Befestigen von zwei faserförmigen Schichten aneinander verwendet wird.

18. Das Verfahren gemäß einem der Ansprüche 15 bis 17, **dadurch gekennzeichnet, dass** das elektrisch leitfähige Polymer in Form einer Dispersion in das Bindemittel gemischt wird.

19. Das Verfahren gemäß einem der Ansprüche 15 bis 18, dass durch Herstellen einer Bindemittelmischung **gekennzeichnet** ist, bei der die Konzentration des elektrisch leitfähigen Polymers ungefähr 0.1 bis 10 Gew.-% der Mischung ist.

20. Das Verfahren gemäß einem der Ansprüche 15 bis 19, **dadurch gekennzeichnet, dass** das Bindemittel wasserlöslich oder wasserdispergierbar ist und es zum Beispiel Dextrin, Carboxymethylcellulose, Polyvinylalkohol, Polyvinylacetat oder ein Bindemittel, das auf Stärke oder einem Stärkederivat basiert, umfasst.

21. Das Verfahren gemäß einem der Ansprüche 15 bis 20, **dadurch gekennzeichnet, dass** das elektrisch leitfähige Polymer in dotierter Form verwendet wird.

22. Das Verfahren gemäß Anspruch 21, **dadurch gekennzeichnet, dass** das elektrisch leitfähige Polymer mit dem Bindemittel bei einem sauren pH, bevorzugt bei einem pH von 1 bis 6.5, gemischt wird.

23. Das Verfahren gemäß einem der Ansprüche 15 bis 22, **dadurch gekennzeichnet, dass** der Oberflächenwiderstand der Bindemittelschicht auf einen Wert im Bereich von 10² bis 10¹¹ angepasst werden kann.

24. Das Verfahren gemäß einem der Ansprüche 15 bis 23, **dadurch gekennzeichnet, dass** die Bindemittelmischung auf eine faserförmige Bahn mit einem pH von höchstens 8 aufgebracht wird.

25. Das Verfahren gemäß Anspruch 15, **dadurch gekennzeichnet, dass** das elektrisch leitfähige Polymer durch Behandeln der Polymerschicht mit einer sauren Lösung, die zum Aufmalen eines gewünschten Musters auf die Oberfläche des Papier- oder Kartonproduktes verwendet wird, dotiert wird.

26. Das Verfahren gemäß Anspruch 15, **dadurch gekennzeichnet, dass** das elektrisch leitfähige Polymer durch Behandeln der Polymerschicht mit einer alkalischen Lösung, die zum Aufmalen eines gewünschten Musters auf die Oberfläche des Papier- oder Kartonproduktes verwendet wird, entdotiert wird.

27. Das Verfahren gemäß einem der Ansprüche 15, 25 oder 26, **dadurch gekennzeichnet, dass** das elektrisch leitfähige Polymer durch Aufdrucken eines gewünschten Musters auf die Oberfläche des Papier- oder Kartonproduktes unter Verwendung einer Druckfarbe, die das elektrisch leitfähige Polymer dotieren oder entdotieren kann, dotiert wird.

28. Das Verfahren gemäß einem der Ansprüche 15 bis 27, **dadurch gekennzeichnet, dass** ein Muster auf die Oberfläche des Papier- oder Kartonproduktes aufgedruckt wird, um anzuzeigen, wie die elektrische Leitfähigkeit der zweiten Schicht bestimmt werden kann.

29. Das Verfahren gemäß einem der Ansprüche 15 bis 28, **dadurch gekennzeichnet, dass** eine dritte Schicht auf der ersten oder der zweiten Schicht sitzt.

30. Das Verfahren gemäß Anspruch 29, **dadurch gekennzeichnet, dass** die dritte Schicht durch einen Kunststofffilm gebildet wird, der auf das Produkt extrudiert wird.

31. Das Verfahren gemäß Anspruch 29, **dadurch gekennzeichnet, dass** die dritte Schicht durch eine Schicht aus einer Beschichtungsfarbe gebildet wird.

## Revendications

1. Produit multicouche comprenant
- au moins une première couche, qui est formée par des fibres cellulosiques ou lignocellulosiques, et
- au moins une seconde couche, qui est disposée de manière adjacente à la première couche ou à une certaine distance de celle-ci,
**caractérisé en ce que**
- la seconde couche contient un polymère synthétique, électriquement conducteur, qui est mélangé avec un liant qui forme une matrice liante, la seconde couche étant au moins partiellement électriquement conductrice, et
- la conductivité électrique du polymère électriquement conducteur de la seconde couche est localement ajustée pour former un profil de conductivité électrique ou de non-conductivité électrique, respectivement.

2. Produit multicouche selon la revendication 1, **caractérisé en ce que** le liant forme un mélange homogène avec le polymère électriquement conducteur.

3. Produit multicouche selon la revendication 1, **caractérisé en ce que** le liant de la seconde couche comprend un liant qui se dissout ou se disperse dans l'eau.

4. Produit multicouche selon la revendication 3, **caractérisé en ce que** le liant comprend la dextrine, la carboxyméthylcellulose, l'alcool polyvinylique, le polyacétate de vinyle ou un liant à base d'amidon ou d'un dérivé d'amidon.

5. Produit multicouche selon l'une quelconque des revendications précédentes, **caractérisé en ce qu'**il comprend deux premières couches qui ont été liées ensemble par une seconde couche disposée entre elles.

6. Produit multicouche selon la revendication 5, **caractérisé en ce que** les premières couches sont formées par des nappes fibreuses.

7. Produit multicouche selon la revendication 6, **caractérisé en ce que** les nappes fibreuses sont formées par des nappes en papier ou en carton non symétriques.

8. Produit multicouche selon l'une quelconque des revendications précédentes, **caractérisé en ce qu'**il comprend en outre une troisième couche qui est disposée sur la première ou la seconde couche.

9. Produit multicouche selon la revendication 8, **caractérisé en ce que** la troisième couche est formée par un film en plastique, qui a été extrudé sur la surface du produit.

10. Produit multicouche selon la revendication 8, **caractérisé en ce que** la troisième couche est formée par une couche à base d'une couleur de revêtement.

11. Produit multicouche selon l'une quelconque des revendications précédentes, **caractérisé en ce que** la seconde couche contient un polymère électriquement conducteur choisi dans le groupe de la polyaniline, du polypyrrol et du polythiophène.

12. Produit multicouche selon l'une quelconque des revendications précédentes, **caractérisé en ce que** la concentration du polymère électriquement conducteur dans la seconde couche est d'environ 0,1 à 10 % en poids.

13. Produit multicouche selon la revendication 12, **caractérisé en ce que** la résistivité superficielle de la seconde couche est d'environ 10² à environ 10¹¹ Ohms.

14. Produit multicouche selon l'une quelconque des revendications précédentes, **caractérisé en ce que** la surface du produit multicouche est dotée d'un marquage visuel qui indique la couche contenant le polymère électriquement conducteur.

15. Procédé de production d'un produit multicouche, lequel procédé comprend la production
- d'au moins une couche fibreuse, qui est formée par des fibres cellulosiques ou lignocellulosiques, et
- d'au moins une couche d'un agent adhésif disposée sur la couche fibreuse, **caractérisé en ce que**
- la couche de l'agent adhésif est formée à partir d'un mélange, qui contient un polymère synthétique, électriquement conducteur, qui est mélangé avec un liant,
- ce mélange est appliqué sur la couche fibreuse, et
- la conductivité électrique du polymère est modifiée en dopant le polymère électriquement conducteur ou en dé-dopant le polymère électriquement conducteur, respectivement.

16. Procédé selon la revendication 15, **caractérisé en ce que** le mélange liant est appliqué sous la forme d'une couche au moins partiellement continue sur la couche fibreuse et peut s'attacher à celle-ci.

17. Procédé selon la revendication 15 ou 16, **caractérisé en ce que** le liant est utilisé pour attacher deux couches fibreuses l'une à l'autre.

18. Procédé selon l'une quelconque des revendications 15 à 17, **caractérisé en ce que** le polymère électriquement conducteur est mélangé sous la forme d'une dispersion dans le liant.

19. Procédé selon l'une quelconque des revendications 15 à 18, **caractérisé par** la production d'un mélange liant dans lequel la concentration du polymère électriquement conducteur est d'environ 0,1 à à 10 % en poids du mélange.

20. Procédé selon l'une quelconque des revendications 15 à 19, **caractérisé en ce que** le liant est soluble dans l'eau ou dispersible dans l'eau et qu'il comprend, par exemple, une dextrine, une carboxyméthylcellulose, un alcool polyvinylique, un polyacétate de vinyle ou un liant à base d'amidon ou d'un dérivé d'amidon.

21. Procédé selon l'une quelconque des revendications 15 à 20, **caractérisé en ce que** le polymère électriquement conducteur est utilisé sous une forme dopée.

22. Procédé selon la revendication 21, **caractérisé en ce que** le polymère électriquement conducteur est mélangé avec le liant à un pH acide, de préférence, à un pH de 1 à 6,5.

23. Procédé selon l'une quelconque des revendications 15 à 22, **caractérisé en ce que** la résistivité superficielle de la couche liante formée peut être ajustée à une valeur dans la plage de 10² à 10¹¹.

24. Procédé selon l'une quelconque des revendications 15 à 23, **caractérisé en ce que** le mélange liant est appliqué sur une nappe fibreuse ayant un pH de 8 au plus.

25. Procédé selon la revendication 15, **caractérisé en ce que** le polymère électriquement non conducteur est dopé en traitant la couche du polymère avec une solution acide, qui est utilisée pour peindre un profil souhaité sur la surface du produit de papier ou de carton.

26. Procédé selon la revendication 15, **caractérisé en ce que** le polymère électriquement conducteur est dé-dopé en traitant la couche du polymère avec une solution alcaline, qui est utilisée pour peindre un profil souhaité sur la surface du produit de papier ou de carton.

27. Procédé selon l'une quelconque des revendications 15, 25 ou 26, **caractérisé en ce que** le polymère électriquement conducteur est dopé en imprimant un profil souhaité sur la surface du produit de papier ou de carton en utilisant une couleur d'impression qui est capable de doper ou de dé-doper le polymère électriquement conducteur.

28. Procédé selon l'une quelconque des revendications 15 à 27, **caractérisé en ce qu'**un profil est imprimé sur la surface du produit de papier ou de carton pour indiquer comment la conductivité électrique de la seconde couche peut être détectée.

29. Procédé selon l'une quelconque des revendications 15 à 28, **caractérisé en ce qu'**une troisième couche est disposée sur la première ou la seconde couche.

30. Procédé selon la revendication 29, **caractérisé en ce que** la troisième couche est formée par un film en plastique, qui est extrudé sur le produit.

31. Procédé selon la revendication 29, **caractérisé en ce que** la troisième couche est formée par une couche à base d'une couleur de revêtement.
